## Europäisches Patentamt

## European Patent Office

## Office européen des brevets

(19)

(11) Publication number: **0 083 559**
A1

(12) **EUROPEAN PATENT APPLICATION**

(21) Application number: 82850260.9

(22) Date of filing: 14.12.82

(51) Int. Cl.³: **B 65 G 47/22,** B 65 G 47/90,
B 23 Q 7/04, B 23 Q 7/16,
B 21 D 43/10, B 30 B 15/30

(30) Priority: 15.12.81 SE 8107503

(43) Date of publication of application: 13.07.83
Bulletin 83/28

(84) Designated Contracting States: BE DE FR GB IT

(71) Applicant: AB VOLVO, Torslanda, S-405 08 Göteborg
(SE)

(72) Inventor: Rasmussen, Kai, Olle Montanus väg 35,
S-29300 Olofström (SE)

(74) Representative: Lagman, Sven et al, H. Albihns
Patentbyra AB Box 7664, S-103 94 Stockholm (SE)

(54) Turning device.

(57) A turning device for conveying an object (2) while rotating the object at the same time about an axis perpendicular to the direction of conveyance has at least one swingably mounted arm (8) with a gripper (9) for holding the object. The gripper is rotatable in the arm and is disposed, as the arm is swung, to rotate in the opposite direction thereto and at a greater angular velocity. By making the angular velocity of the gripper twice that of the arm, an object can be turned one-half rotation in a special manner during conveyance in a semi-circular path.

## TURNING DEVICE

The invention relates to a turning device for conveying an object a specific distance horizontally from a starting position to an end position, while simultaneously turning the object about an axis essentially perpendicular to the direction of conveyance, and provided with at least one swingably mounted arm carrying a gripper for holding the object when conveying said object in an arcuate path between the starting position and the end position as the arm swings in the direction of conveyance.

Turning devices are previously known in various forms. A common type uses arms with fixed grippers. The object to be turned will thus have the same position relative to the arm throughout the entire turning process. Large objects thus require a great amount of space in order to carry out the turning movement, and the air resistance can be appreciable for rapid turning movements, which can result in problems if the object is not sufficiently rigid.

The purpose of the invention is to eliminate the disadvantages of known turning devices and to achieve a turning device which makes it possible to turn, during conveyance, even large objects in a relatively small space, e.g. between adjacent presses in a line of presses.

This is achieved according to the invention by virtue of the fact that the gripper, in a manner known per se, is mounted in the arm and is arranged, as the arm swings, to rotate in the opposite direction thereto and at a greater angular velocity, that the arm is disposed outside the path of movement of the object, and that the gripper is disposed, when beginning conveyance of an object from the starting position, to have its axis of rotation in the arm located behind, relative to the direction of conveyance, a forward edge of the object. The object will thus be given an advantageous path of movement during the turning as a result of the fact that it can be rotated relative to the arm.

According to an especially advantageous embodiment, two arms, each provided with an individual gripper, can be arranged opposite to each other with the gripping ends of the grippers facing each other and be swung synchronically about an essentially horizontal axis. This makes it possible to turn relatively broad objects.

The invention will be described in the following in more detail with the aid of examples shown in the accompanying drawings, of which

Fig. 1 shows a view from above of a turning device according to the invention,

Fig. 2 shows a side view of the turning device in Fig. 1 with the arms in another position,

Fig. 3 shows a perspective view of the right-hand portion of the turning device in Fig. 2,

Fig. 4 shows an enlarged view of a portion of the turning device with the components in a particular position, and

Fig. 5 shows schematically the pattern of movement when turning an object with a turning device according to the invention.

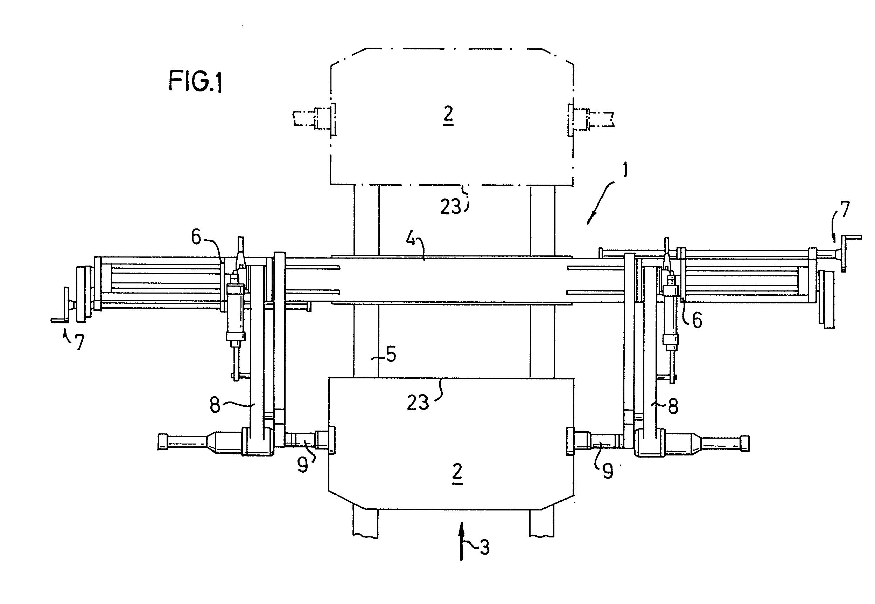

As can be seen in Fig. 1, a turning device according to the invention is used to convey an object 2 in a direction 3. During conveyance from a starting position shown with solid lines to a final position shown with dash-dot lines, the object has been turned relative to an axis substantially perpendicular to the direction of conveyance 3. This axis coincides essentially with the longitudinal axis of a frame 4 in the turning device and which can be detachably mounted on an underframe 5.

The frame 4 carries two movable supports 6 each of which can be adjusted to various positions relative to the frame 4 with the aid of an adjusting means 7. Each support 6 supports a swingably mounted arm 8 which is provided at its free end with a gripper 9.

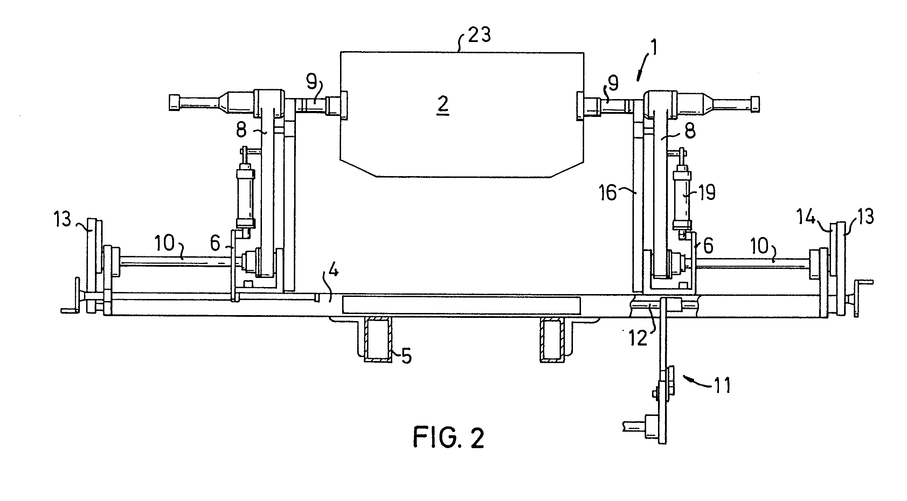

As can be seen in Figs. 1 and 2, the arms 8 are placed opposite to each other, with the grippers 9 directed towards each other. The arms are swingable in individual vertical planes with the aid of individual shafts 10 which are mounted both in the frame 4 and in the support 6. A drive arrangement 11, common to both of the arms 8, drives a drive shaft 12 extending along the entire frame and having a driver 13 at each end. Each of these drivers 13 engages a crank 14 rigidly mounted on each shaft 10.

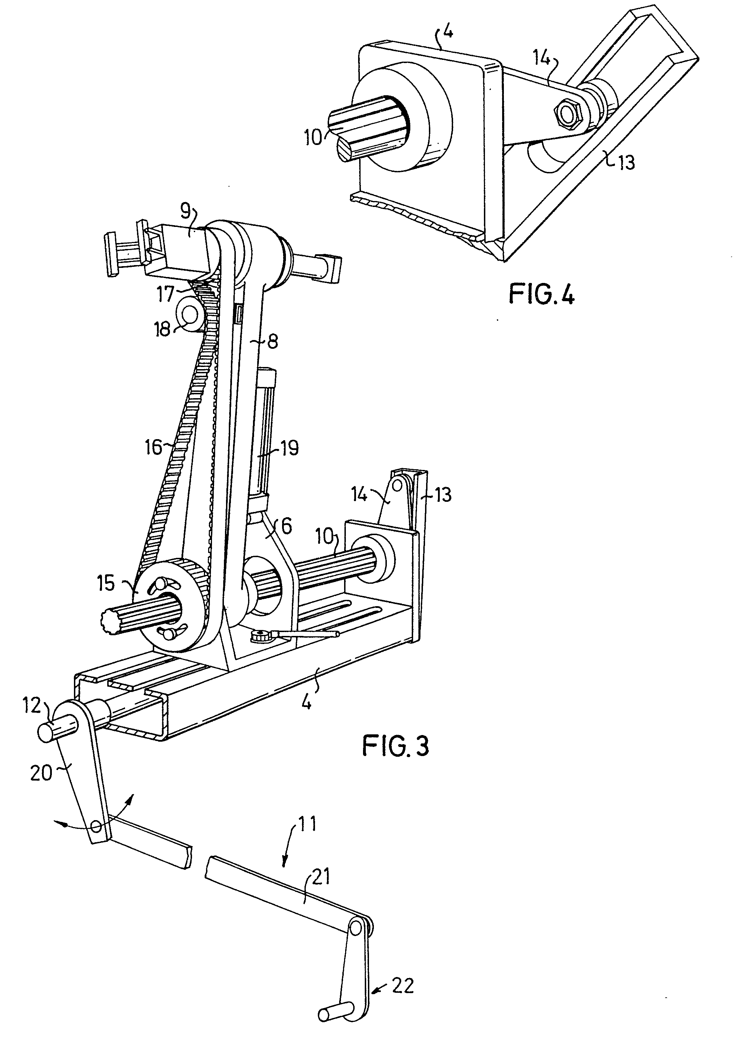

As can be seen in Fig. 3, each arm 8 together with its support 6 is displaceable along the frame 4 and its shaft 10, which can suitably be made as a splined shaft. The support 6 carries a non-rotatably mounted wheel 15 around which an endless means 16 runs which also runs around a wheel 17 non-rotatably joined to the gripper 9, and which is kept in tension by a tension roller 18. The gripper 9 is, together with its wheel 17, rotatably mounted in the arm 8. The endless means 16 can suitably be a cogged belt, and the wheels 15 and 17 are suitably provided with corresponding cogs. Other means, for example V-belts, are possible however. To dampen the movement of the arm 8 there is a damping device 19, e.g. in the form of a pneumatic cylinder, coupled between the arm and the support 6.

In the drive arrangement 11 there is an arm 20 non-rotatably joined to the drive shaft 12, which is disposed to be swung reciprocally with the aid of a rod 21 and a driven crank 22.

The turning device 1 functions as follows. With the arms 8 in a horizontal starting position shown in Fig. 1, in which the driver 13 and the crank 14 assume the position shown in Fig. 4, the grippers 9 are extended axially relative to the arms 8, so that they can grasp the object 2 to be moved. The operation of the grippers 9 can suitably be either hydraulic or pneumatic. With the aid of the drive arrangement 11, the arm 20 is rotated counter-clockwise as shown in Fig. 3, whereby the drive shaft 20 via the drivers 13 turns the cranks 14 and the shafts 10 in the same direction. The arms 8 will thereby be lifted from their horizontal starting positions. With the aid of the endless means 16 the gripper 9 will, as the arm 8 is swung, be rotated in the opposite direction thereto. By virtue of the fact that the wheel 15 has a larger diameter than the wheel 17, the gripper will be rotated at a greater angular velocity than the arm 8. The angular velocity of the gripper 9 will be twice that of the arm 8 when the diameter of the wheel 15 is twice the diameter of the wheel 17. This means that when the arms 8 have reached a vertical position, the forward edge 23 of the object 2, as shown in the starting position in Fig. 1, will be the highest point of the now vertically oriented object 2. When the arms 8 have swung through an angle of 90° from the starting position, the gripper 9 will have rotated through an angle of 180° in the opposite direction to the arms. When the arm 20 has been turned through an angle of about 90° counter-clockwise, the cranks 14 and thus also the shafts 10 and the arms 8 will have turned through an angle of about 180°, so that the object 2 is in the position shown with dash-dot lines in Fig. 1, where the edge 23 is now at the rear . relative to the direction of transport. The grippers can now release the object, whereafter the arms 8 can be returned to the starting position shown in Fig. 1 by turning the arm 20 clockwise to pick up a new object 2.

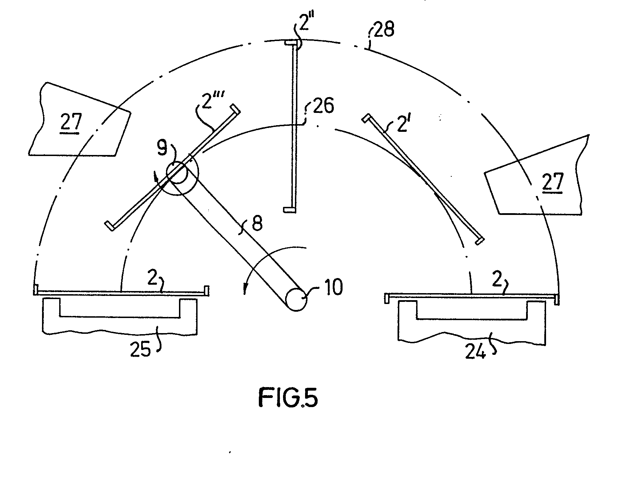

The pattern of movement obtained with the aid of a turning device 1 according to the invention is shown schematically in Fig. 5. An object is to be conveyed from a support 24 on the right in the figure to a support 25 on the left in the figure. The gripper will thus describe a semi-circular path 26 with its center at the shaft 10. The object 2 will be rotated relative to the arm 8 in a manner indicated by the various positions 2', 2", 2"'.

As can be seen in Fig. 5, it is possible with the turning device according to the invention to have various obstructions 27 extend inside the semi-circular path 28, which would have been described by the outer edge of the object 2 if a conventional turning device were used in which the object does not change position relative to the arm as it swings. A turning device according to the invention is thus easier to use than conventional turning devices in places where there is relative little space. Air resistance on the object to be moved is also reduced by the pattern of the path of movement; and this is of particular importance when conveying large objects of limited rigidity. It is of course not always necessary to use two arms. For small and rigid objects a single arm can often suffice. A turning device according to the invention can of course also be used to move objects vertically, and the arms can of course be swung through an angle greater than or less than 180° as required. The desired relation between the rotation of the gripper and the swinging of the arm can be achieved by a suitable ratio between the diameters of the wheels 15 and 17.

A turning device according to the invention can be used with advantage to turn sheet metal parts being conveyed from one press to another. The turning device according to the invention can be combined with particular advantage with a step conveyor of the type described in Swedish Patent Application 8102364-0, with the same drive arrangement driving both the step conveyor and the turning device. By placing the turning device between the two raisable and lowerable supports, the turning device can convey objects between the supports at the tempo at which the conveyor works.

## CLAIMS

1. Turning device for conveying an object a specific distance horizontally from a starting position to an end position, while simultaneously turning the object about an axis perpendicular to the direction of conveyance, provided with at least one swingably mounted arm (8) carrying a gripper (9) for holding the object when conveying said object in an arcuate path between the starting position and the end position as the arm swings in the direction of conveyance, characterized in that the gripper (9) is, in a manner known per se, rotatably mounted in the arm (8) and is arranged, as the arm swings, to rotate in the opposite direction thereto and at a greater angular velocity; in that the arm (8) is located outside the path of movement of the object; and in that the gripper (9) is disposed, when beginning conveyance of an object from the starting position, to have its axis of rotation in the arm located behind, relative to the direction of conveyance, a forward edge (23) of the object.

2. Turning device according to Claim 1, characterized in that the gripper (9) is rotatable at an angular velocity which is essentially twice the angular velocity of the arm (8); and in that the arm is disposed, between the starting position and the end position, to be swung through an angle of essentially 180°.

3. Turning device according to Claim 2, characterized in that the starting position and the end position are located in essentially the same horizontal plane as the axis about which the arm (8) swings; and in that the arm is oriented so that the gripper (9) moves above said horizontal plane.

4. Turning device according to Claim 2, characterized in that two arms (8), each provided with an individual gripper (9), are arranged opposite each other with the gripping ends of the grippers facing each other, said arms being synchronically swingable about an essentially horizontal axis.

5. Turning device according to Claim 4, characterized in that the distance between the arms (8) is greater than the width of the object.

6. Turning device according to Claim 4, characterized in that the arms (8) are each mounted in an individual support (6) in a frame (4), said supports preferably being adjustable in the frame to adjust the distance between the arms.

7. Turning device according to Claim 6, characterized in that the arms (8) are each in non-rotatable engagement with an individual rotating shaft (10) mounted in the frame (4) and the support (6); and in that each arm is displaceable, together with its support, along the rotating shaft.

8. Turning device according to Claim 6, characterized in that the gripper (9) is rotatable by means of an endless means (16) which runs over a wheel (15) non-rotatably mounted in the support (6) and which has a greater diameter than a wheel (17) non-rotatably joined to the gripper (9) and over which the endless means also runs.

9. Turning device according to Claim 7, characterized in that each rotating shaft (10) carries a crank (14) which is in engagement with a driver (13) mounted on a common drive shaft (12) for the arms, rotation of the drive shaft through an angle of about 90° in one direction being sufficient to swing the arms between starting position and end position, or vice versa, while a rotation of the same magnitude in the opposite direction produces a corresponding, oppositely directed movement of the arms.

10. Turning device according to Claim 4, characterized in that at least one gripper (9) is displaceable along its axis of rotation in the arm (8).

0083559

FIG.1

FIG. 2

0083559

**FIG.4**

**FIG.3**

0083559

FIG.5

0083559

# EUROPEAN SEARCH REPORT

Application number

EP 82 85 0260

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X,A | US-A-3 617 054 (SCHILLING) <br> * Column 5, line 16 - column 6, line 17 ; figures 1, 9 * <br><br> --- | 1,2-8 | B 65 G 47/22 <br> B 65 G 47/90 <br> B 23 Q 7/04 <br> B 23 Q 7/16 <br> B 21 D 43/10 <br> B 30 B 15/30 |
| X,A | US-A-4 056 198 (BOSERUP) <br> * Column 1, lines 27-62 ; column 4, lines 44-51 ; column 6, line 53 - column 7, line 8 ; figures 1-4, 10 * <br><br> --- | 1,10 | |
| A | FR-A-2 391 131 (MATRA) <br> * Figure 3 * <br><br> --- | 6 | |
| A | US-A-2 815 866 (WATTER) <br><br> ----- | | |

| | TECHNICAL FIELDS SEARCHED (Int. Cl. 3) |
|---|---|
| | B 21 D 43/00 <br> B 23 Q 7/00 <br> B 30 B 15/00 <br> B 65 G 47/00 <br> B 65 G 57/00 |

The present search report has been drawn up for all claims

| Place of search <br> BERLIN | Date of completion of the search <br> 07-03-1983 | Examiner <br> SIMON J J P |
|---|---|---|